(19)

Europäisches Patentamt

European Patent Office

Office européen des brevets

(11) **EP 4 783 206 A1**

(12) **EUROPEAN PATENT APPLICATION**
published in accordance with Art. 153(4) EPC

(43) Date of publication:
29.07.2026 Bulletin 2026/31

(21) Application number: 24868311.2

(22) Date of filing: 19.09.2024

(51) International Patent Classification (IPC):
H01G 11/06 (2013.01)     H01G 11/30 (2013.01)
H01G 11/38 (2013.01)     H01G 11/42 (2013.01)
H01G 11/68 (2013.01)     H01M 4/13 (2010.01)
H01M 4/36 (2006.01)     H01M 4/38 (2006.01)
H01M 4/48 (2010.01)     H01M 4/66 (2006.01)
H01M 4/587 (2010.01)

(52) Cooperative Patent Classification (CPC):
H01G 11/06; H01G 11/30; H01G 11/38;
H01G 11/42; H01G 11/68; H01M 4/13; H01M 4/36;
H01M 4/38; H01M 4/48; H01M 4/587; H01M 4/66;
Y02E 60/10

(86) International application number:
PCT/JP2024/033456

(87) International publication number:
WO 2025/063234 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 JP 2023158289

(71) Applicant: Niterra Co., Ltd.
Nagoya-shi, Aichi 461-0005 (JP)

(72) Inventors:
• SAKAMOTO, Kenneth Kazuya
Nagoya-shi, Aichi 461-0005 (JP)
• MATSUURA, Hiroyuki
Nagoya-shi, Aichi 461-0005 (JP)

(74) Representative: Zimmermann & Partner
Patentanwälte mbB
P.O. Box 330 920
80069 München (DE)

(54) **ELECTRODE, CELL, MODULE, AND PACK**

(57)     Provided are an electrode (10), a cell (20), a module (31), and a pack (30) which can improve the energy density and output characteristics of a power storage device. The electrode includes a current collector (11) and a material-mixed layer (12) attached to the current collector, and the material-mixed layer contains an Si-containing material (14) and a carbon-based active material (15). In a region (16) of a cross section of the material-mixed layer taken in a stacking direction, which region extends 5 μm in a thickness direction from an interface (13) between the material-mixed layer and the current collector, the ratio R1 of an area of the Si-containing material to the sum of the area of the Si-containing material and an area of the carbon-based active material is 10% or greater and 40% or less. The cell includes an electrode including a lithiated material-mixed layer.

FIG. 1

## Description

### TECHNICAL FIELD

The present invention relates to an electrode containing a carbon-based active material and a material containing silicon, to a cell, to a module, and to a pack.

### BACKGROUND ART

Patent Literature 1 discloses a prior art technique for an electrode which includes a current collector, and a material-mixed layer containing a carbon-based active material and a silicon-containing material. According to the prior art technique, in a surface portion of the material-mixed layer, which is the farthest from the current collector, the ratio of the amount of the silicon-containing material to the total amount of the carbon-based active material and the silicon-containing material is set to 50 mass% or greater. The prior art technique shows that, when a piece of metal lithium foil is bonded to the surface portion at the time of preliminary doping (hereinafter may also be referred to as "pre-doping") for causing the electrode to support Li ions in advance, diffusion of Li ions into the material-mixed layer is facilitated.

### CITATION LIST

### PATENT LITERATURE

Patent Literature 1: JP 2015-46220 A

### SUMMARY OF INVENTION

### TECHNICAL PROBLEM

The prior art technique has room for improvement in terms of the energy density and output characteristics of a power storage device including electrodes. The energy density means the energy per unit mass or unit volume which can be taken out from the charged power storage device.

The present invention has been made so as to solve this problem, and an object of the invention is to provide an electrode, a cell, a module, and a pack which can improve the energy density and output characteristics of a power storage device.

### SOLUTION TO PROBLEM

A first mode of the present invention which achieves this object is an electrode comprising a current collector and a material-mixed layer attached to the current collector, the material-mixed layer containing a Si-containing material and a carbon-based active material, wherein, in a region of a cross section of the material-mixed layer, which region extends 5 $\mu$m in a thickness direction from an interface between the material-mixed layer and the current collector, the ratio R1 of an area of the Si-containing material to the sum of the area of the Si-containing material and an area of the carbon-based active material is 10% or greater and 40% or less.

A second mode is the electrode of the first mode, wherein the ratio R1 is 20% or greater and 40% or less.

A third mode is the electrode of the first or third mode, wherein the carbon-based active material is one or more types of materials selected from porous carbon, natural graphite, artificial graphite, easily graphitizable carbon, hardly graphitizable carbon, and carbon fiber.

A fourth mode is the electrode of any of the first to third modes, wherein the Si-containing material is one or more types of materials selected from silicon and silicon oxides.

A fifth mode is the electrode of any of the first to fourth modes, wherein the current collector is formed of one or more types of materials selected from copper, aluminum, and stainless steel.

A sixth mode is a cell comprising the electrode of any one of the first to fifth modes, wherein the electrode includes a lithiated material-mixed layer.

A seventh mode is a module comprising a plurality of cells of the sixth mode.

An eighth mode is a pack comprising a plurality of modules of the seventh mode.

### ADVANTAGEOUS EFFECTS OF INVENTION

According to the present invention, in a region of a cross section of the material-mixed layer taken in the stacking direction, which region extends 5 $\mu$m in the thickness direction from the interface between the material-mixed layer and the current collector, the ratio R1 of the area of the Si-containing material to the sum of the area of the Si-containing material and the area of the carbon-based active material is 10% or greater and 40% or less. By virtue of improvement of the ion conductivity and electron conductivity in the region of the pre-doped electrode, which region extends 5 $\mu$m in the thickness direction from the interface of the material-mixed layer, the energy density and output characteristics of the power storage device can be improved.

BRIEF DESCRIPTION OF DRAWINGS

FIG. 1 is a sectional view of an electrode according to one embodiment.
FIG. 2 is a sectional view of a cell.
FIG. 3 is a perspective view of a pack.
FIG. 4 is an exploded perspective view of a module.

DESCRIPTION OF EMBODIMENTS

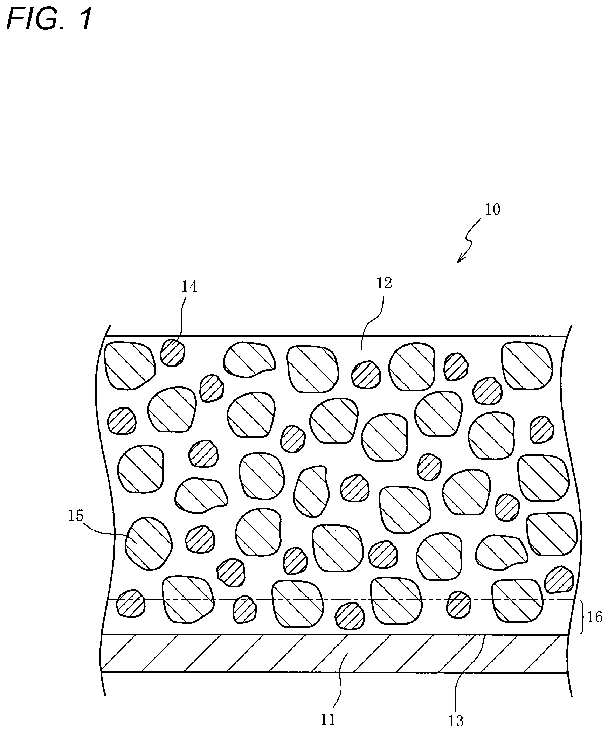

Hereinafter, a preferred embodiment of the present invention will be described with reference to attached drawings. FIG. 1 is a schematic sectional view of an electrode 10 according to one embodiment. The electrode 10 includes a current collector 11 and a material-mixed layer 12 attached to the current collector 11. No particular limitation is imposed on the material of the current collector 11, and examples of the material include Cu, Al, Cu alloy, Al alloy, and stainless steel. No particular limitation is imposed on the shape of the current collector 11. The current collector 11 may be a piece of porous foil having a plurality of holes which penetrate the current collector 11.

The material-mixed layer 12 contains an Si-containing material 14 containing silicon, and a carbon-based active material 15. No particular limitation is imposed on the Si-containing material 14 so long as it contains silicon and can occlude and release Li. Examples of the Si-containing material 14 include Si, Si-Li alloy, and a compound which contains Si and O as constituent elements (hereinafter referred to as "SiOx" ($0.5 \leq X \leq 1.5$)).

Examples of SiOx (silicon oxides) include oxides of Si and those having a structure in which microcrystalline or amorphous Si is dispersed in an amorphous $SiO_2$ matrix. Since $SiO_X$ is poor in electrical conductivity, it is preferred to provide an electrically conductive layer which covers the surface of $SiO_X$ or combine $SiO_X$ and an electrically conductive material. An example of the means for combining SiOx and the electrically conductive material is granulation. Examples of the material of the electrically conductive layer include carbon and metals such as Pt and Os. Examples of the electrically conductive material include graphite, low-crystalline carbon, easily graphitizable carbon (soft carbon), hardly graphitizable carbon (hard carbon), carbon black, carbon nanotubes, carbon fibers, and fibrous and coil-shaped metals.

In the case where the Si-containing material 14 is low in electrical conductivity, in order to reduce independent particles of the Si-containing material 14, a conducting aid is mixed with and dispersed in the material-mixed layer 12, thereby forming an electricity conducting network. Examples of the conducting aid include carbon black, acetylene black, Ketjen black, carbon nanotubes, and fibrous and coil-shaped metals.

Particles of the Si-containing material 14 used have a median diameter of, for example, 0.2 to 20 $\mu$m for ensuring its utilization rate. The median diameter is the particle size at which the cumulated value of a volume-based cumulative undersize distribution, obtained through measurement of the particle size distribution by the laser diffraction and scattering method, becomes 50%.

No particular limitation is imposed on the carbon-based active material 15, so long as it contains carbon and can occlude and release Li. Examples of the carbon-based active material 15 include porous carbon, natural graphite, artificial graphite, easily graphitizable carbon, hardly graphitizable carbon, and carbon fiber. In order to secure the capacity of the electrode 10, the carbon-based active material 15 preferably contains particles having a volume-based median diameter of 1 to 30 $\mu$m obtained through measurement of the particle size distribution by the laser diffraction and scattering method.

In a cell in which an Li ion works as a carrier ion, the electrode 10 containing silicon exhibits a lower potential in relation to the Li metal reference potential ($Li^+/Li$) and exhibits a large capacity density. However, since silicon forms irreversible Si-O-Li bonds, thereby consuming Li ions, the irreversible capacity becomes large. There has been known a technique (pre-doping) for reducing the irreversible capacity by causing Li ions whose amount corresponds to at least a part of the irreversible capacity to react with the electrode 10 before assembly of a cell, so that Li ions are supported by the electrode 10 beforehand. Pre-doping of Li ions into the electrode 10 makes it possible to lower the potential of the negative electrode and thus increase the cell voltage, whereby the energy density can be increased.

In a region 16 of a material-mixed layer 12 which extends 5 $\mu$m in the thickness direction from the interface 13 between the current collector 11 and the material-mixed layer 12, the ratio R1 of the area of the Si-containing material 14 appearing in a cross section of the material-mixed layer 12 to the sum of the area of the Si-containing material 14 and the area of the carbon-based active material 15 appearing in the cross section is 10% or greater and 40% or less. Thus, the ion conductivity of the region 16 of the pre-doped electrode 10 is improved. In addition, when an Li alloy is formed in the Si-containing material 14 having occluded Li ions as a result of pre-doping, Si-Si bonds break, whereby the electron density increases. As a result, the electron conductivity of the region 16 is improved.

Since it is possible to reduce the resistance of the electrode 10 while maintaining the electrostatic capacity of the electrode 10 by the electrical conductivity between the Si-containing material 14 and the current collector 11 in addition to the electrical conductivity between the carbon-based active material 15 and the current collector 11 in the region 16, the output characteristics of a cell 20 (which will be described later) can be improved, whereby the maximum power which can be taken out from the charged cell 20 can be increased. In addition, since elevation of the potential of the electrode 10 during discharge can be suppressed and thus the voltage of the cell 20 can be increased, high energy density can be achieved.

When the ratio R1 of the region 16 is 20% or greater and 40% or less, the ion conductivity and the electron conductivity of the region 16 are further improved. Therefore, setting the ratio R1 of the region 16 to be 20% or greater and 40% or less is advantageous for improvement of the output characteristics of the cell 20.

Meanwhile, when the ratio R1 of the region 16 is less than 10%, it becomes difficult to improve the electron conductivity of the region 16, which results in a tendency that the output characteristics are not improved. When the ratio R1 of the region 16 exceeds 40%, there are observed a tendency that the region 16 easily separates from the current collector 11 due to expansion of the Si-containing material 14 having occluded Li ions as a result of pre-doping, and a tendency that, since the potential of the electrode 10 easily elevates during discharge, the cell voltage decreases, and thus the output characteristics deteriorate.

The ratio R2 of the area of the Si-containing material 14 appearing in a cross section of the entire material-mixed layer 12 to the sum of the area of the Si-containing material 14 and the area of the carbon-based active material 15 appearing in the cross section of the material-mixed layer 12 is preferably 10% or greater and 40% or less, more preferably 20% or greater and 40% or less. This is because it is possible to suppress separation of the material-mixed layer 12 from the current collector 11 due to expansion of the Si-containing material 14 having occluded Li ions as a result of pre-doping.

The Si-containing material 14 and the carbon-based active material 15 appearing in a cross section of the material-mixed layer 12 can be identified by using a scanning electron microscope (SEM) equipped with an energy dispersive x-ray spectrometer (EDS). Through image analysis of a cross section (in the stacking direction) of the material-mixed layer 12 obtained by using the SEM, the areas of the Si-containing material 14, which contains Si, and the carbon-based active material 15, which contains C, can be measured individually, and thus, the ratios R1 and R2 can be obtained.

The ratio R2 can be calculated by individually measuring the areas of the Si-containing material 14 and the carbon-based active material 15 in the cross section from, for example, a rectangular region of 100 $\mu$m (vertical) $\times$ 240 $\mu$m (horizontal) of an image. The image is captured such that the horizontal sides of the image become approximately parallel to the interface 13. In the case where the thickness of the material-mixed layer 12 is less than 100 $\mu$m, an image whose vertical dimension is 100 $\mu$m cannot be obtained. Therefore, the vertical length of the image is set to be equal to the thickness of the material-mixed layer 12, and the horizontal length of the image is set such that the area of the image becomes 24,000 $\mu$m$^2$.

The ratio R1 can be calculated by individually measuring the areas of the Si-containing material 14 and the carbon-based active material 15 in the cross section, for example, for a rectangular region 16 of 5 $\mu$m (vertical) $\times$ 240 $\mu$m (horizontal) of an image including the interface 13. The image is set such that the horizontal sides of the image extend along the interface 13.

The electrode 10 is manufactured by, for example, the following procedure. First, a slurry is prepared. The slurry contains the Si-containing material 14 and carbon-based active material 15 as essential components, and a binder and a thickener as optional components, which are dispersed in a dispersion medium. The ratio between the Si-containing material 14 and the carbon-based active material 15 is set to fall within the range of 1:9 to 3:7 (volume ratio).

Examples of the binder include fluororesins, acrylic resins, polyolefins, and rubber. Examples of fluororesins include polytetrafluoroethylene, polyvinylidene fluoride, and vinylidene fluoride-hexafluoropropylene copolymer. Examples of polyolefins include polyethylene and polypropylene. An example of rubber is styrene-butadiene rubber. An example of the thickener is carboxymethylcellulose. Examples of the dispersion media include organic solvents such as N-methyl-2-pyrrolidone and water.

The prepared slurry is applied to a current collector 11 and dried, whereby an electrode 10 in which a material-mixed layer 12 has been formed on the current collector 11 is obtained. The dried material-mixed layer 12 may be rolled with a roller or the like.

Subsequently, Li is supplied to the electrode 10 for pre-doping of Li ions in an amount corresponding to at least a part of the irreversible capacity. Pre-doping is performed, for example, by a method of forming a short-circuit between the current collector 11 and a layer of metal lithium with a separator disposed between the material-mixed layer 12 and the layer of metal lithium and immersing the electrode 10, the separator, and the layer of metal lithium in an electrolytic solution. Due to the potential difference between the current collector 11 and the layer of metal lithium, electrons flow from the layer of metal lithium into the current collector 11. Simultaneously, metal lithium becomes ions, which are released into the electrolytic solution, and Li ions in the electrolytic solution are supported by the material-mixed layer 12.

Thus, the electrode 10 in which the material-mixed layer 12 has been lithiated by pre-doping of Li ions is obtained. Current may be caused to flow between the current collector 11 and the layer of metal lithium during pre-doping. Lithiation of the material-mixed layer 12 means that some of atoms that make up the material-mixed layer 12 are replaced by lithium atoms; i.e., the material-mixed layer 12 contains lithium.

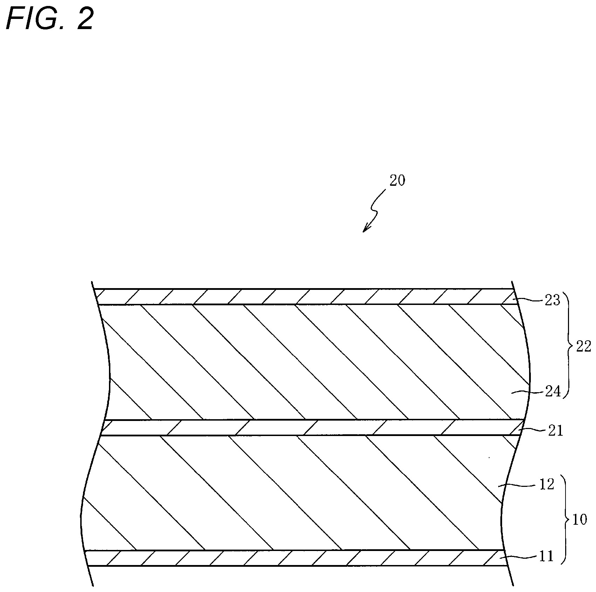

FIG. 2 is a sectional view of the cell 20. The cell 20 is an electrochemical element which uses an Li ion as a carrier ion. The cell 20 in the present embodiment is a lithium ion capacitor. The cell 20 includes the electrode 10 (negative electrode), a separator 21, and a positive electrode 22 stacked in this order.

FIG. 2 shows the cell 20 which includes one set of the electrode 10, the separator 21, and the positive electrode 22. However, the cell 20 may include a plurality of sets of the electrodes 10, the separators 21, and the positive electrodes 22. The structure of the cell 20 is not limited to a stacked-type structure. The cell 20 may have a wound structure in which the electrode 10 and the positive electrode 22 are stacked with the separator 21 intervening therebetween and are wound.

The positive electrode 22 includes a material-mixed layer 24 and a current collector 23 stacked thereon. Examples of the material of the current collector 23 include metals selected from among Ni, Ti, Fe, and Al; alloys each containing two or more of these elements; and stainless steel.

The material-mixed layer 24 contains an active material such as graphite or activated carbon, and a conducting aid. Examples of the conducting aid include carbon black, acetylene black, Ketjen black, and carbon fiber. The active material may be any material which can reversibly support anions and is not limited to graphite and activated carbon.

The material-mixed layer 24 may contain a binder for binding the active material and the conducting aid. Examples of the binder include a fluororesin, polyolefin, polyvinylpyrrolidone, poly(vinyl alcohol), cellulose ether, and rubber such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

The separator 21 is formed of a porous body which is resistive to the active materials contained in the positive electrode 22 and the electrode 10 and to an electrolytic solution and which allows passage of lithium ions but has no electron conductivity. Examples of the material of the separator 21 include a nonwoven fabric and a porous membrane formed of cellulose, polypropylene, polyethylene, etc.

The electrolytic solution is formed of a lithium salt dissolved in a solvent. The lithium salt is a compound which is employed for establishing transfer of lithium ions between the positive electrode 22 and the electrode 10. Examples of the anion of the lithium salt include halide ions (e.g., $I^-$, $Cl^-$, and $Br^-$), $SCN^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, and $B(O_2C_2O_2)_2^-$.

No particular limitation is imposed on the solvent of the electrolytic solution as long as it is a liquid in the operating temperature range of the cell 20. Examples of the solvent include a carbonate ester, an aliphatic carboxylate ester, a phosphate ester, a $\gamma$-lactone, an ether, a nitrile, a sulfolane, dimethyl sulfoxide, a fluorous solvent, and an ionic liquids. The solvent may be a mixture of these.

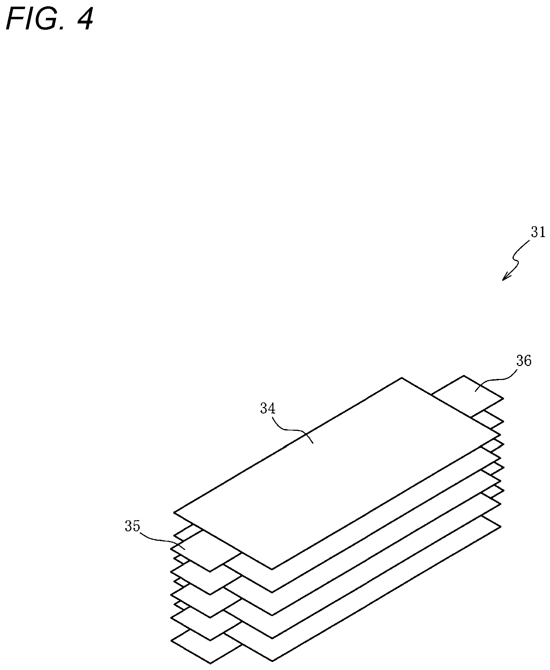

The cell 20 is manufactured by, for example, the following procedure. A slurry is prepared by dispersing an active material and a conducting aid into a solution containing a binder dissolved therein. The slurry is applied onto the current collector 23 and is dried to thereby yield a green sheet (positive electrolyte sheet) for providing the positive electrode 22. The separator 21, the positive electrode sheet, and the electrode 10 are cut into predetermined shapes. The cut sheets (the positive electrode sheet, the separator 21, the electrode 10 which have been cut) are stacked in this order. To the current-collectors 11, 23, terminals 35, 36 (see FIG. 4) are connected, respectively, and the resultant stacked body is enclosed in a case 34 (see FIG. 4) together with an electrolytic solution. Thus, the cell 20 including the positive electrode 22, the separator 21 and the electrode 10 (negative electrode) in this order is obtained.

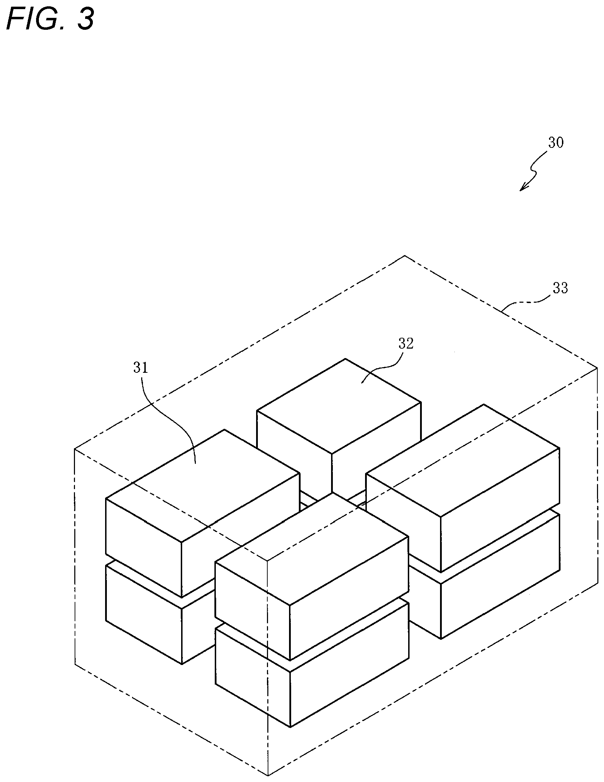

FIG. 3 is a perspective view of a pack 30. The pack 30 includes modules 31 each of which includes a plurality of cells 20 (see FIG. 2). The pack 30 according to the present embodiment has a housing 33 in which the plurality of modules 31 and an ECU (electronic control unit) 32 are housed. An example of the material of the housing 33 is a metal. The modules 21 and the ECU 32 are fixed to the wall of the housing 33. The plurality of modules 31 are connected in series or parallel.

FIG. 4 is an exploded perspective view of the module 31. The module 31 includes a plurality of cases 34 in each of which the cell 20 (see FIG. 2) is enclosed. The terminal 35 connected to the current collector 11 of the electrode 10 (negative electrode) and the terminal 36 connected to the current collector 23 of the positive electrode 22 extend to the outside of the case 34. The plurality of terminals 35, 36 are connected in series or parallel. No limitation is imposed on the shape of the case 34, and the case 34 may have a laminate shape or a cylindrical shape.

An ECU (not shown) may be provided in the module 31. The voltages, temperatures, etc. of the plurality of cells 20 are inputted to the ECU. In the case where the temperature of each cell 20 is inputted to the ECU, a thermometer for detecting the temperature of the case 34 and inputting the detected temperature to the ECU is provided. The ECU provided in the module 31 adjusts, for example, the voltage of each cell 20.

The ECU 32 of the pack 30 (see FIG. 3) monitors the cells 20 of the module 31 by detecting the state quantities (voltage and temperature) of each cell 20. The monitoring of the cells 20 includes, for example, determining whether or not each state quantity is an abnormal value and stopping the charging and discharging of the cells 20 when the state quantity is the abnormal value. In the present embodiment, the case where the state quantities of the plurality of modules 31 are detected by the sole ECU 32 is shown as an example. However, the present invention is not limited thereto. Of course, it is possible to provide the ECU 32 for each module 31. A cooling circuit (not shown) for cooling the modules 31 may be provided in the pack 30.

EXAMPLES

The present invention will next be described in more detail by way of Examples, which should not be construed as limiting the invention thereto.

(Production of electrode)

Particles of graphite (carbon-based active material) and particles of silicon covered with carbon (silicon-containing material) were mixed at various ratios, thereby preparing various mixtures. Each mixture (100 parts by mass), carbon black (conducting aid) (1 part by mass), styrene butadiene rubber (binder) (5 parts by mass), and carboxymethylcellulose (thickener) (1 part by mass) were put in pure water (107 parts by mass), and were mixed by using a mixer, whereby a slurry was prepared. The slurry was applied onto a current collector formed of copper foil having a thickness of 8 $\mu$m such that the total mass of graphite and silicon became 6.5 mg/cm$^2$. Subsequently, the slurry was vacuum-dried at 70°C for 1 hour to form a material-mixed layer having a thickness of about 100 $\mu$m. In this manner, electrodes in samples Nos. 1 to 9 were obtained.

(Pre-doping of Li ions into electrode)

A separator and a piece of metal lithium foil (counter electrode) press-bonded to a piece of copper foil were attached in this order onto the material-mixed layer of the electrode, whereby a half cell was fabricated. The half cell was immersed in an electrolytic solution, and vacuum degassing and sealing were performed. After constant-current charging of 0.1 C was performed at 25°C until the voltage became 0 V by causing current to flow between the piece of copper foil of the electrode of the half cell and the piece of copper foil of the counter electrode thereof, constant-voltage charging was performed up to 0.01 C, whereby pre-doping was performed. The electrolytic solution was prepared by dissolving lithium bis(fluorosulfonyl) imide (LiFSI) as a lithium salt (1 mol/dm$^3$) in a solvent obtained by mixing ethylene carbonate and diethyl carbonate.

(Fabrication of cell)

The lithiated electrode was removed from the half cell, and a separator and an activated-carbon electrode (counter electrode) were attached, in this order, onto the lithiated material-mixed layer, whereby a cell was fabricated. After injecting an electrolytic solution (4 mL) into the cell, an excessive portion of the electrolytic solution was removed, and sealing was performed in a vacuum state, whereby a cell (lithium ion capacitor) was obtained.

(Calculation of energy density)

1 C rate charging was performed for the cell at 25°C until the voltage became 3.8 V (U1), constant-voltage charging was performed at 3.8 V for 30 minutes, and 1 C rate discharging was performed until the volage became 2.2 V (U2). The electrostatic capacity C was obtained by substituting in Expression (1) the current I (A) at the time of the discharging, the voltage change $\Delta$U from the start of the discharging to the stop of the discharging, and the time elapsed $\Delta$t, and the energy density was calculated from Expression (2).

$$C = I \cdot \Delta t / \Delta U \qquad \text{Expression (1)}$$

$$\text{Energy density} = 0.5 \cdot C \cdot (U1^2 - U2^2)/3600 \qquad \text{Expression (2)}$$

(Calculation of power)

After 50 C rate charging was performed for the cell at 25°C until the voltage became 3.8 V (U1) and constant-voltage charging was performed at 3.8 V for 30 minutes, 50 C rate discharging was performed until the volage became 2.2 V (U2). The resistance R of the cell was obtained by dividing a voltage drop at the start of the discharging by the current during the discharging, and the power was calculated from Expression (3).

$$\text{Power} = \text{U1}^2/(4{\cdot}\text{R}) \qquad\qquad \text{Expression (3)}$$

(Calculation of ratios R1 and R2)

After cutting the pre-doped electrode perpendicularly to the current collector, an image of a cross section of the material-mixed layer 12 was obtained by using an SEM. The area of the Si-containing material 14 and the area of the carbon-based active material 15 in a rectangular region of 100 $\mu$m (vertical) $\times$ 240 $\mu$m (horizontal) of the image were measured by using an image analysis software program imageJ 1.53k. The ratio R2 of the area of the Si-containing material 14 to the sum of the area of the Si-containing material 14 and the area of the carbon-based active material 15 was obtained. Similarly, the area of the Si-containing material 14 and the area of the carbon-based active material 15 in the rectangular region 16 of 5 $\mu$m (vertical) $\times$ 240 $\mu$m (horizontal) including the interface 13 were measured by using the image analysis software program imageJ 1.53k, and the ratio R1 of the area of the Si-containing material 14 to the sum of the area of the Si-containing material 14 and the area of the carbon-based active material 15 was obtained.

(Judgement)

By using the energy density and power of the cell of sample No. 9 (R1 = R2 = 0%) as references, the energy density and power of each of the cells of samples Nos. 1 to 8 in relation to those of the cell of sample No. 9 were calculated. By considering the energy density of the cell of sample No. 9 as 100%, a sample whose energy density was 101% or greater was judged that its rating was "A," and a sample whose energy density was less than 101% was judged that its rating was "C." By considering the power of the cell of sample No. 9 as 100%, a sample whose power was 110% or greater was judged that its rating was "A," a sample whose power was 101% or greater and less than 110% was judged that its rating was "B," and a sample whose power was less than 101% was judged that its rating was "C."
Table 1 shows, for each of the cells of sample No. 1 to sample No. 9, the ratio R1 (%), the ratio R2 (%), the energy density (%), and the power (%). Table 1 also shows, for each of the cells of sample No. 1 to sample No. 8, the lower one between the rating for the energy density (A or C) and the rating for the power (A, B, or C).

[Table 1]

| No. | R1 (%) | R2 (%) | Energy density (%) | Power (%) | Judgement |
|---|---|---|---|---|---|
| 1 | 14 | 10 | 102 | 106 | B |
| 2 | 18 | 15 | 102 | 108 | B |
| 3 | 22 | 20 | 101 | 135 | A |
| 4 | 25 | 25 | 102 | 119 | A |
| 5 | 28 | 30 | 101 | 117 | A |
| 6 | 35 | 40 | 102 | 112 | A |
| 7 | 41 | 50 | 81 | 45 | C |
| 8 | 100 | 100 | 47 | 32 | C |
| 9 | 0 | 0 | 100 | 100 | - |

As shown in Table 1, in the case of the cells of sample No. 1 to sample No. 6 in which the ratio R1 was 10% or greater and 40% or less, both of the energy density and the power were 101 % or greater in relation to those of the cell of sample No. 9. In contrast, in the case of the cell of sample No. 7 in which the ratio R1 was 41%, the energy density was 81% and the power was 45% in relation to those of the cell of sample No. 9. These results reveal that when the ratio R1 is 10% or greater and 40% or less, the energy density and the output characteristics of the cell can be improved.

In the case of the cells of sample No. 3 to sample No. 6 in which the ratio R1 was 20% or greater and 40% or less, the power was 110% or greater in relation to that of the cell of sample No. 9. These results reveal that when the ratio R1 is 20% or greater and 40% or less, the output characteristics of the cell can be further improved.

The present invention has been described on the basis of the embodiment. However, the present invention is not limited to the above embodiment. It can be easily inferred that various improvements and modifications are possible so long as they fall within the scope of the present invention.

In the above-described embodiment, there has been described the cell 20 which has the positive electrode layer 22 in which the material-mixed layer 24 is provided on one surface of the current collector 23, and the electrode 10 (negative electrode) in which the material-mixed layer 12 is provided on one surface of the current collector 11. However, the present invention is not necessarily limited thereto. It should be apparent for those skilled in the art that the elements of the above embodiment can be applied to, for example, a cell which includes an electrode layer (so-called bipolar electrode) having the current collector 23 and the material-mixed layer 12 and the material-mixed layer 24 provided on the opposite surfaces of the current collector 23. By alternately stacking the bipolar electrode and the separator 21 and putting the stacked body into a case (not illustrated), a cell having a so-called bipolar structure can be obtained.

In the above-described embodiment, the electrode 10 in which the material-mixed layer 12 is provided on one surface of the current collector 11 has been described. However, the present invention is not necessarily limited thereto. Of course, it is possible to provide the material-mixed layer 12 on both surfaces of the current collector 11.

In the embodiment, a lithium ion capacitor has been shown and described as an example of the cell 20 including the electrode 10. However, the present invention is not necessarily limited thereto. Examples of other cells (power storage devices) including the electrode 10 include secondary batteries such as lithium ion batteries.

REFERENCE SIGNS LIST

10    electrode
11    current collector
12    material-mixed layer
13    interface
14    Si-containing material
15    carbon-based active material
16    region
20    cell
30    pack
31    module

**Claims**

1.  An electrode comprising a current collector and a material-mixed layer attached to the current collector, the material-mixed layer containing a Si-containing material and a carbon-based active material, wherein
    in a region of a cross section of the material-mixed layer taken in a stacking direction, which region extends 5 $\mu$m in a thickness direction from an interface between the material-mixed layer and the current collector, the ratio R1 of an area of the Si-containing material to the sum of the area of the Si-containing material and an area of the carbon-based active material is 10% or greater and 40% or less.

2.  The electrode according to claim 1, wherein the ratio R1 is 20% or greater and 40% or less.

3.  The electrode according to claim 1 or 2, wherein the carbon-based active material is one or more types of materials selected from porous carbon, natural graphite, artificial graphite, easily graphitizable carbon, hardly graphitizable carbon, and carbon fiber.

4.  The electrode according to claim 1 or 2, wherein the Si-containing material is one or more types of materials selected from silicon and silicon oxides.

5.  The electrode according to claim 1 or 2, wherein the current collector is formed of one or more types of materials selected from copper, aluminum, and stainless steel.

6.  A cell comprising the electrode as recited in claim 1 or 2, wherein the electrode includes a lithiated material-mixed layer.

7. A module comprising a plurality of cells as recited in claim 6.

8. A pack comprising a plurality of modules as recited in claim 7.

FIG. 1

# FIG. 2

FIG. 3

FIG. 4

## INTERNATIONAL SEARCH REPORT

| International application No. |
|---|
| **PCT/JP2024/033456** |

### A. CLASSIFICATION OF SUBJECT MATTER

*H01G 11/06*(2013.01)i; *H01G 11/30*(2013.01)i; *H01G 11/38*(2013.01)i; *H01G 11/42*(2013.01)i; *H01G 11/68*(2013.01)i; *H01M 4/13*(2010.01)i; *H01M 4/36*(2006.01)i; *H01M 4/38*(2006.01)i; *H01M 4/48*(2010.01)i; *H01M 4/66*(2006.01)i; *H01M 4/587*(2010.01)i

FI:  H01G11/06; H01M4/13; H01M4/587; H01M4/48; H01M4/38 Z; H01M4/66 A; H01M4/36 E; H01G11/68; H01G11/38; H01G11/42; H01G11/30

According to International Patent Classification (IPC) or to both national classification and IPC

### B. FIELDS SEARCHED

Minimum documentation searched (classification system followed by classification symbols)

H01G11/06; H01G11/30; H01G11/38; H01G11/42; H01G11/68; H01M4/13; H01M4/36; H01M4/38; H01M4/48; H01M4/66; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-534654 A (LG CHEM, LTD.) 26 November 2020 (2020-11-26) paragraphs [0015], [0030], [0078]-[0079], [0082]-[0083], example 1 | 1-8 |
| A | JP 2013-16505 A (JSR CORPORATION) 24 January 2013 (2013-01-24) table 3 | 1-8 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 October 2024** | **12 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/033456** |

| Patent document cited in search report | | | Publication date (day/month/year) | Patent family member(s) | | | Publication date (day/month/year) |
| --- | --- | --- | --- | --- | --- | --- | --- |
| JP | 2020-534654 | A | 26 November 2020 | US 2020/0303728 A1 paragraphs [0015], [0037], [0089]-[0090], [0092]-[0093], example 1 | | | |
| | | | | WO 2019/059637 A2 | | | |
| | | | | EP 3675243 A2 | | | |
| | | | | KR 10-2019-0033915 A | | | |
| | | | | CN 111095615 A | | | |
| JP | 2013-16505 | A | 24 January 2013 | US 2014/0038041 A1 table 3 | | | |
| | | | | JP 2013-12491 A | | | |
| | | | | WO 2012/111472 A1 | | | |
| | | | | EP 2677568 A1 | | | |
| | | | | KR 10-2013-0105751 A | | | |
| | | | | CN 103460453 A | | | |
| | | | | KR 10-2014-0044409 A | | | |
| | | | | KR 10-2014-0046082 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015046220 A